# EUROPEAN PATENT APPLICATION

(11) **EP 4 529 992 A1**
(43) Date of publication of application: **02.04.2025**
(21) Application number: 23306617.4
(22) Date of filing: 27.09.2023
(51) Int. Cl.: B09B 3/30, B03B 9/06, B09B 3/65, B29B 17/02, C02F 11/04, C05F 7/00, C05F 9/00, B09B 101/25, B09B 101/70, C02F 103/32

(54) **DEVICE AND METHOD FOR PREPARING AN ORGANIC SOUP FROM ORGANIC WASTE MATERIAL(S)**

(71) Applicant: Saria International GmbH, 59379 Selm (DE)
(72) Inventor: Kassebaum, Frank, 32584 Löhne (DE); Grüßing, Thomas, 98597 Breitungen (DE)
(74) Representative: Casalonga

(57) **Abstract**

The present invention belongs to the field of biowaste valorization and pertains to devices and methods for preparing an organic soup from organic waste material(s).

The present invention pertains to devices and methods for preparing an organic soup from organic waste material(s), wherein said preparation of an organic soup is performed upstream of for a step of fat extraction and/or anaerobic digestion.

## Description

### FIELD OF THE INVENTION

The present invention belongs to the field of biowaste valorization and more particularly to a device and process for preparing an organic soup from organic waste material(s).

### BACKGROUND OF THE INVENTION

Being able to create a circular economy without waste is a goal of policy makers. As the world population and waste production rates are expected to keep rising during the years ahead, the development and selection of sustainable waste management solutions becomes more and more pressing.

In light of the volume of organic waste being generated including by households, the use of better strategies for its management is seen as part of the solution to this pressing problem.

Both bulk and packaged organic wastes are concerned and, in terms of waste management, it is important to note that packaged organic wastes require an additional step to separate the organic matter from the packaging material before further processing.

Waste valorization is a strategy to improve current waste management practices, and is being studied and applied with increasing interest to organic waste fractions, including food waste.

Generally speaking, waste valorization is the process of reusing, recycling or composting waste materials and converting them into more useful products including materials, chemicals, fuels or other sources of energy. As such, valorization adds economic value to waste while reducing the volume of waste that ends up in landfills or incineration units which, until now, represented the way in which a large part of the organic waste are disposed of.

Landfilling is the process of burying waste in a landfill. Landfilling can cause environmentally unacceptable pollution discharges to the water and, as real estate values increase, it is considered to be an unattractive use of land. This method additionally contributes to greenhouse emissions by releasing methane. Thus, current waste management strategies seek to limit the amount of wastes directed to landfills.

Incinerators, or waste-to-energy plants, are waste management facilities where material is burnt to create energy. Although efforts are made to separate out hazardous materials from the waste stream, these plants have had a history of emissions and operational problems related to contaminants. The residual ash created from this burning has also, in some cases, been found to be hazardous.

From the above, it appears that waste management in general (including organic waste management) presents significant problems.

As mentioned above, one possible solution to this problem is the development of strategies for the valorization of organic waste.

One such strategy is the development of anaerobic digestion plants, based on the process of anaerobic digestion, also called "methanization". Thanks to this process, it is possible to extract value from the organic fraction of organic waste, packed or not, and take advantage of this resource for the production of renewable energy and fertilizers.

In fact, the primary objective of anaerobic digestion is the production of a mixture of hydrocarbon gases, referred to as biogas, which may be utilized as an energy source to generate electricity and/or heat.

Despite the fact that current plants for treatment of wastes (or deconditioning) and anaerobic digestion reduce the environmental impact and increase the added value of wastes, further improvements are required.

Generally speaking, the systems for biowaste deconditioning are based on the following working principle. Selected types of organic wastes are introduced into a (mechanical) deconditioner which crushes the organic waste and separates the organic matter from the packaging residues to produce an organic soup intended to be used in anaerobic digestion.

Since, after this deconditioning phase, the organic soup still contains undesirable elements (e.g., packaging fragments), it needs to pass through a filtering system. After this phase, the organic soup is sent to a methanization unit to produce biogas and digestate. After this digestion phase, the digestate can be spread on agricultural land because of its fertilizing properties. Current methods do not remove (or do not sufficiently remove) from the soup the undesired residues, which thus remain in the digestate and are not degraded during the digestion phase. However, once the digestate is spread on agricultural land, these residues can be problematic for the soil. In addition, if the undesired residues remain in the digester of the anaerobic digestion unit, they will progressively reduce the digestion capacity of the digester and negatively affect the operational and economic efficiency of the unit itself.

In general, the current main problems of the actual systems for waste deconditioning are:
- the need to develop systems able to cope with a greater variability of biowastes, i.e. the use of all types of biowaste, regardless of their nature or composition (whether they are rich in organic matter or not, packaged or not, solid or liquid, *etc...*);
- the necessity to develop systems capable of treating large volumes of biowastes, to fulfil the needs for increased recycling;
- the need to improve the quality of the products of the waste management process, especially a better separation of the packaging (in the form of coarse as well as fine particles), with the triple aim of a) not polluting and not clogging the deconditioning system (operational efficiency), b) avoiding the release of plastics into the ground (safety) and c) recovering the packaging materials (plastics, papers, *etc.*) and directing them to the appropriate channels for recycling while letting the organic content into the organic soup. In other words, the organic content within the packaging material should be as little as possible to maximize the Biochemical Methane Potential (BMP) of the organic soup and to reduce the cost of disposing the packaging material or to avoid limiting its valorization;
- the necessity to make anaerobic digestion less sensitive to the presence of fermentation inhibitors that are often present in the biowaste, which have the potential to reduce or prevent fermentation of the deconditioned organic soup and to keep the total available energy.

Given the above-mentioned limitations of the currently employed systems for waste deconditioning, the technical problem at the basis of the present invention is the provision of an efficient and cost-effective apparatus and method for the deconditioning of any type of organic waste, less sensitive to the variability of the waste content, and capable of producing organic matter of excellent quality.

To this end, the present Invention concerns an improved device and method for preparing an organic soup from any type of organic waste material(s).

### SUMMARY OF THE INVENTION

According to a first aspect, the present invention pertains to a device for preparing an organic soup from organic waste material(s), comprising:
a) an ON-SITE RECEPTION UNIT, comprising:
   i. a solid/mixed waste management module and/or
   ii. a liquid waste management module,
b) a LIGHT INERTS REMOVAL UNIT configured for removing light inert particles, comprising:
   i. optionally, a hopper screw for mixing the solid wastes and allowing the preparation of the matter for its deconditioning, and
   ii. at least one deconditioner module to separate packaging and other light residues from organic matter, and
c) a HEAVY INERTS REMOVAL UNIT combining static and dynamic sedimentations.

The device of the present invention allows to treat a large variety of organic waste material(s). Despite this high waste variability, the present device allows to obtain an organic soup having rather stable composition and properties.

According to a second aspect, the present invention pertains to the preceding device, further comprising a BIOWASTE CHARACTERIZATION UNIT comprising a documentary system for selecting and dosing input waste materials.

According to a third aspect, the present invention pertains to the preceding device, which is connected to a BIOGAS PLANT UNIT comprising:
a) an anaerobic digestion module configured for the anaerobic digestion of the organic soup,
b) a digestate module,
c) a filtration module configured for removing the inert particles from the digestate, and
d) optionally, a module configured for separating the insoluble fraction from the digestate.

According to this aspect of the invention, the device of the invention is connected to a unit for anaerobic digestion of the organic soup. The main products of anaerobic digestion are biogas and digestate. The biogas can be used for co-generation of heat and electricity or by injection of biomethane into the grid, while the digestate can be used as fertilizer. Hence, this aspect of the invention allows to extract value from the organic waste material(s).

According to a forth aspect, the present invention pertains to any of the preceding devices, which is connected to or comprises a DEFATTING UNIT comprising:
a) a phase separator module configured to separate fat from materials of higher density present in the organic soup;
b) a light residues separation module, connected to the module of point a), comprising:
   i) a first physical separation device configured to separate light residues with lower density than water (especially plastic residues) from the fat,
   ii) a press configured to apply a pressure onto the light residues to collect the residual fat, or a second physical separation device such as a centrifugation device, and means to convey the residual fat back to the phase separator module, and
c) a storage and sedimentation module, configured to allow the separation of fat from the residual fraction.

This aspect of the invention provides an additional mean to maximize the value of the organic waste material(s). This aspect can be implemented by connecting the HEAVY INERTS REMOVAL UNIT of such device to a unit for extracting fats from said organic soup. Alternatively, this aspect can also be implemented by connecting the LIGHT INERTS REMOVAL UNIT to a unit for extracting fats from said organic soup.

According to another aspect, the present invention pertains to any of the preceding devices, wherein the LIGHT INERTS REMOVAL UNIT further comprises a second deconditioner module.

The use of a second deconditioner module allows to further reduce the percentage of inerts, essentially heavy inerts, in the organic matter.

An additional advantage of the use of a second deconditioner module is that it guarantees the separation of coarse packaging and other light residues from organic matter in case of malfunction or failure of the main deconditioner module. In such a situation, the second deconditioner module acts as a security barrier by avoiding that coarse packaging and other light residues remain into the organic matter. Such coarse packaging and other light residues may pollute and clog the deconditioning system.

According to still another aspect, the present invention pertains to any of the preceding devices, further comprising means for recirculating the organic material between the hygienization module and the HEAVY INERTS REMOVAL UNIT.

The advantages of such recirculation are that (i) during the hygienization step the organic matter is heated, which makes it more fluid, therefore facilitating the inerts removal, (ii) it allows the organic matter to be treated several times, and (iii) it allows to obtain an organic soup of high quality that can be directly injected in a DEFATTING UNIT without risk of abrasion of the components of the unit itself due to the presence of inerts.

The present invention also concerns a method for preparing an organic soup from organic waste material(s) using the device of any of the preceding claims, comprising:
a) selecting, analyzing and dosing input waste materials using a documentary system;
b) collecting the organic waste material(s) selected in a), separating the liquid wastes from the solid/mixed wastes and :
   i. optionally, removing the heavy particles from the liquid wastes by sedimentation, and
   ii. optionally, discharging the solid/mixed wastes into a hopper allowing the mixing of the materials to be treated,
c) removing light inert particles by:
   i. optionally, mixing the solid wastes and allowing the preparation of the matter for its deconditioning by means of a hopper screw, and
   ii. separating packaging and other light residues from organic matter by means of at least one deconditioner module,
d) removing heavy inert particles by:
   i. allowing the heavy inert particles to sediment,
   ii. heating the organic matter at about 50-90°C for at least 1 hour, and
   iii. eliminating the residual heavy inert particles from the organic soup.

According to a particular aspect, the present invention pertains to the preceding method, further comprising a step of measuring the dry matter content of the organic matter at the outlet of the at least one deconditioner module and adjusting the dry matter content of said organic soup between about 5 and 30%. The adjustment of the dry matter content of the organic soup at the outlet of the at least one deconditioner module between about 5 and 30% depends on whether, for example, it is desired to increase the treatment capacity of the anaerobic digester and on the characteristics of the anaerobic digester itself, i.e. on the maximum capacity at which it can adequately operate.

The method of the invention also provides for a system to adjust the dry matter content of the organic matter at the outlet of the at least one deconditioner module between about 5 and 30%, depending on the destination envisaged for the organic matter.

According to another specific aspect, the present invention pertains to any of the preceding methods, wherein the dry matter content of the organic soup is measured at the end of step d) and is diluted to about 5-30% in case it is higher than said value.

The method of the invention additionally provides for a system to adjust the dry matter content of the organic soup after heavy inerts removal between about 15 and 20%, depending on the destination envisaged for the organic soup.

According to still another specific aspect, the present invention pertains to any of the preceding methods, wherein at least two deconditioner modules are used, so that the percentage of inert particles in the organic soup obtained after light inerts removal is below 0.15%, preferably below 0.10%, more preferably below 0.05%.

### FIGURE LEGENDS

**Figure 1**: Schematic representation, in the form of a flowchart, of a device according to the invention that could be installed in a plant and employed for preparing an organic soup from organic waste material(s) as well as for fat extraction and biogas/digestate production from such organic soup.
**Figure 2****:** More detailed representation of the flowchart of Figure 1.

### DETAILED DESCRIPTION

As used herein, the terms "comprise", or variations such as "comprises" or "comprising" as well as "including" and variations such as "include", "includes," and "included", are not limiting.

As used herein, the singular form "a", "an" and "the" include singular and plural references unless the context indicates otherwise.

As used herein, the term "and/or", e.g., "X and/or Y" shall be understood to mean either "X and Y" or "X or Y" and shall be taken to provide explicit support for both meanings or for either meaning.

The term "about" when used before a numerical value indicates that the value may vary within reasonable range, such as ± 10%, ± 5%, and ± 1%. The expression "about x" includes the value "x."

In the present text, the percentage of inerts within e.g., an organic matter or an organic soup, is expressed as the ratio between the total mass of the inert components and the mass of the dry matter multiplied by 100.

As used herein, the term "waste collection" or variations such as "biowaste collection" refer to a part of the process of waste management and denotes the operations for transferring waste from a point of use and disposal to a point of treatment. Such operations include the preparation of waste for its transport, the placement of waste into containers, its storage before any analysis or validation confirming that it can be sent to deconditioning (for example, via a documentary system as defined in the present text) *etc.*

As used herein, the terms "waste deconditioning", "biowaste deconditioning", "deconditioning", "waste treatment", "biowaste treatment" and "treatment" refer to the steps required to treat the collected biowaste to separate the packaging from the organic fraction and to process the recovered organic fraction so as to obtain an organic soup. The aim of waste deconditioning is therefore to obtain an organic soup, which can then be used for different applications (e.g., biogas and digestate production, fat extraction, *etc.*)*.* The steps of waste deconditioning include, but are not limited to, biowaste collection, biowaste evaluation and separation, packaging removal, light and heavy inerts separation and hygienization.

As used herein, the term 'organic soup' refers to a product of the deconditioning of organic waste material(s). The composition of the organic soup and its physico-chemical and biological properties (e.g., dry-matter content, percentage of inert particles, Biochemical Methane Potential (BMP), *etc.*) can significantly vary as a function of the input waste material(s) and of the precise steps carried out to obtain it during deconditioning. The organic soup is considered as a bioresource and it can be further processed, e.g. it may be processed by anaerobic digestion to produce biogas and digestate and/or used for fat extraction. The term organic soup as used in the present text refers to the final product of waste deconditioning. To describe the intermediate products obtained during the different steps of the deconditioning process, the terms 'organic matter' or 'organic materials' are applied.

As used herein, the terms 'anaerobic digestion', 'anaerobic fermentation', 'fermentation' or 'methanization' refer to a sequence of processes by which microorganisms metabolize biodegradable material, e.g. biowaste, in the absence of oxygen. Anaerobic digestion can follow the deconditioning process as defined above. With the terms 'anaerobic digester' or 'digester' is meant a system promoting the degradation of biodegradable material, i.e. a system where the material to be decomposed is put into contact with microorganisms under conditions and for a time necessary for degradation of said organic material. The process of anaerobic digestion produces a biogas and digestate. 'Biogas' is used herein to refer to a mixture of methane, carbon dioxide, and/or traces of other 'contaminant' gases. The term 'digestate' indicates a mixture comprising the remaining material the microorganisms are unable to digest and any dead bacteria. As part of an integrated waste management system, anaerobic digestion reduces the emission of landfill gas into the atmosphere. Anaerobic digestion is considered as a way to extract energy from the biowaste because it allows to obtain biogas that can be used directly as fuel, in combined heat and power gas engines or upgraded to natural gas-quality biomethane, and digestate, which can be used, for example, as a fertilizer. The energy obtained is considered to be renewable energy.

As used herein, the terms 'organic waste material(s)', 'organic waste material', 'organic waste', 'biowaste' or 'biodegradable waste' refer to at least partially biodegradable wastes, i.e., at least part of which can be decomposed by, e.g., microorganisms during anaerobic digestion. Examples of organic waste materials include vegetable wastes (e.g., crop residue, kitchen waste, green market waste, forest biomass, roadside vegetation, and aquatic plant biomass), animal wastes (e.g., urine, poultry excrete, fish), animal by-products (e.g., slaughterhouse waste, catering waste, fallen stock, manure, eggshells, feathers), waste from an industry producing organic waste that is not dangerous, such as waste from food and feed industries, and solid municipal waste (e.g., city garbage, biogas slurry, sewage, sugar industry, paper mill waste).

'Solid/mixed waste' herein includes any kind of solid and partly solid organic waste, such as sludge, vegetable or animal wastes including both liquid and solid elements, etc.

As used herein, the terms 'configured for' or 'configured to' are used to specify that a certain part of an apparatus, e.g., a module or a unit, has the specific function for which it has been set up or arranged. For example, the expression "the anaerobic digestion module is *configured for* the anaerobic digestion of the organic soup" means that the function of the anaerobic digestion module is to perform the anaerobic digestion of the organic soup, and that it is appropriate to do it.

As used herein, the term 'device' is to be considered as a synonym of terms such as 'apparatus', 'system' or `plant', and it refers to (a collection of) instruments, machines, tools, parts, or other equipment. For example, as used herein, the term 'device' refers to a collection of instruments, machines, tools, parts, or other equipment used for a general purpose, wherein said general purpose is accomplished through one or more 'units', each of which is used for a particular purpose. The particular purpose of each unit is in this case linked to the general purpose of the device. In turn, each unit is composed of one or more 'modules' that help to realize the particular purpose of the unit, by performing sequentially or simultaneously the required steps. In the present text, for example, the term device refers to a set of instruments, machines, *etc.* for preparing an organic soup from organic waste material(s) (the general purpose). To perform its general purpose, this device is made of a series of units each performing a separate, particular function. The particular function of the BIOGAS PLANT UNIT, for example, is to convert the organic soup in biogas and digestate. To do so, it comprises a series of modules, such as an anaerobic digestion module, a digestate module and a filtration module. In the present text, the names of the units are indicated in uppercase letters, while the names of the modules are indicated in lowercase letters.

Other definitions will be specified below, when necessary.

According to a first aspect, the present invention pertains to a device for preparing an organic soup from organic waste material(s), comprising:
a) an ON-SITE RECEPTION UNIT (200), comprising:
   i. a solid/mixed waste management module (220) and/or
   ii. a liquid waste management module (210),
b) a LIGHT INERTS REMOVAL UNIT (300) configured for removing light inert particles, comprising:
   i. optionally, a hopper screw (310) for mixing the solid wastes and allowing the preparation of the matter for its deconditioning, and
   ii. at least one deconditioner module (330) to separate packaging and other light residues from organic matter, and
c) a HEAVY INERTS REMOVAL UNIT (500) combining static and dynamic sedimentations.

The device of the present invention comprises an ON-SITE RECEPTION UNIT (200), comprising a solid/mixed waste management module (220) and/or a liquid waste management module (210).

As used herein, the term 'solid/mixed waste management module' refers to a module dedicated to the management of solid/mixed waste.

The solid/mixed waste management module may comprise different elements including, but not limited to, a hopper where the solid biowaste are discharged and which makes it possible to manage large volumes of biowaste to promote a high variability of the products to be treated, and a collection bins management system. Such system allows empty and dirty bins that have been made available to customers for the management of their biowaste to be washed with automatic machines.

As used herein, the term `liquid waste management module' refers to a module dedicated to the management of liquid waste.

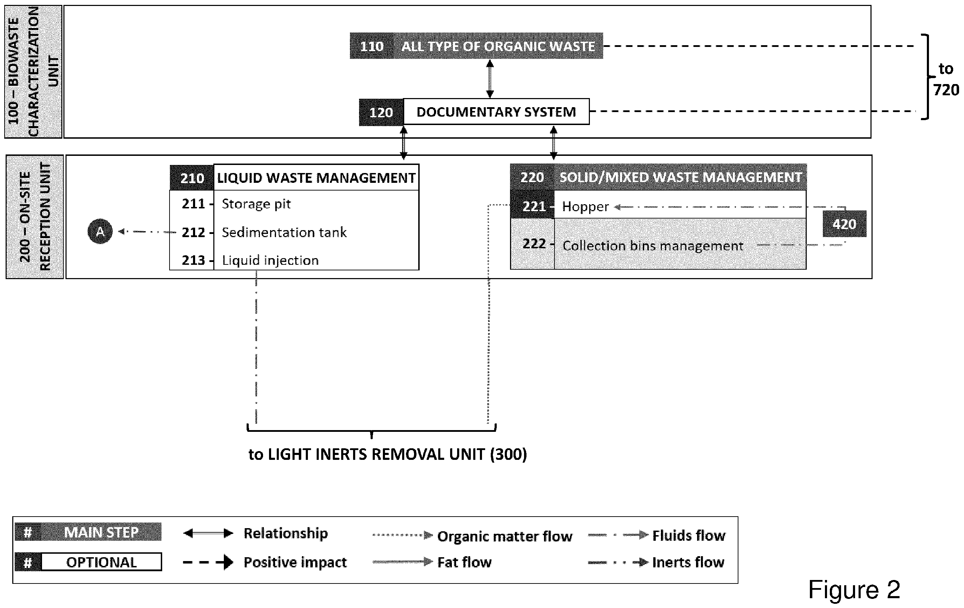

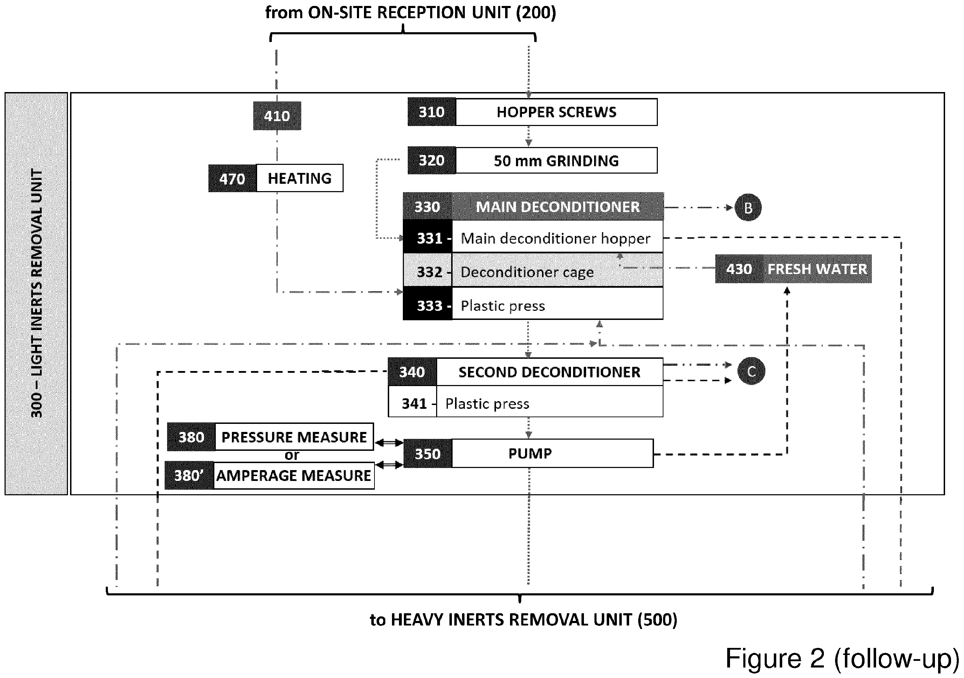

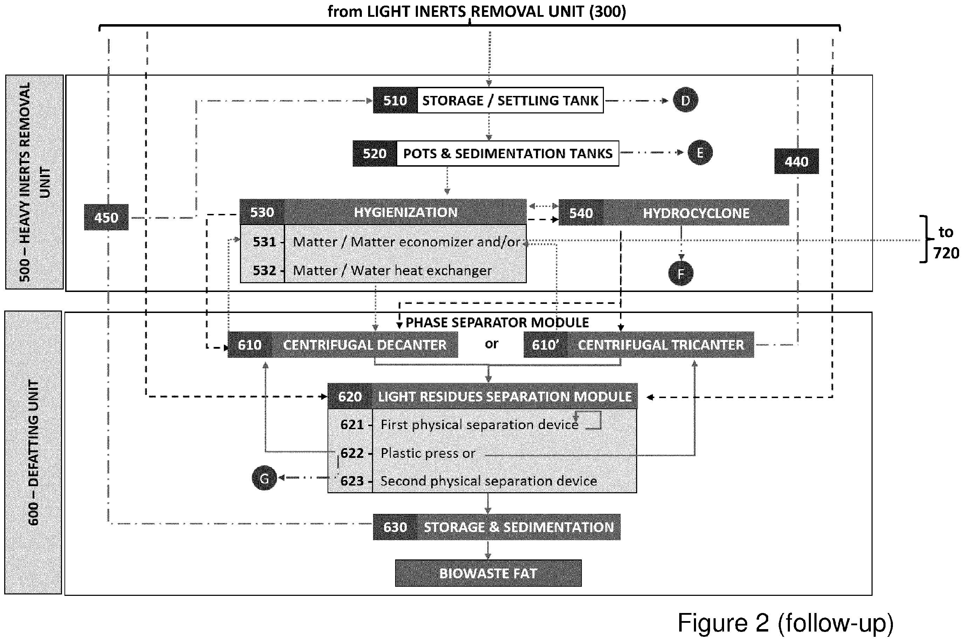

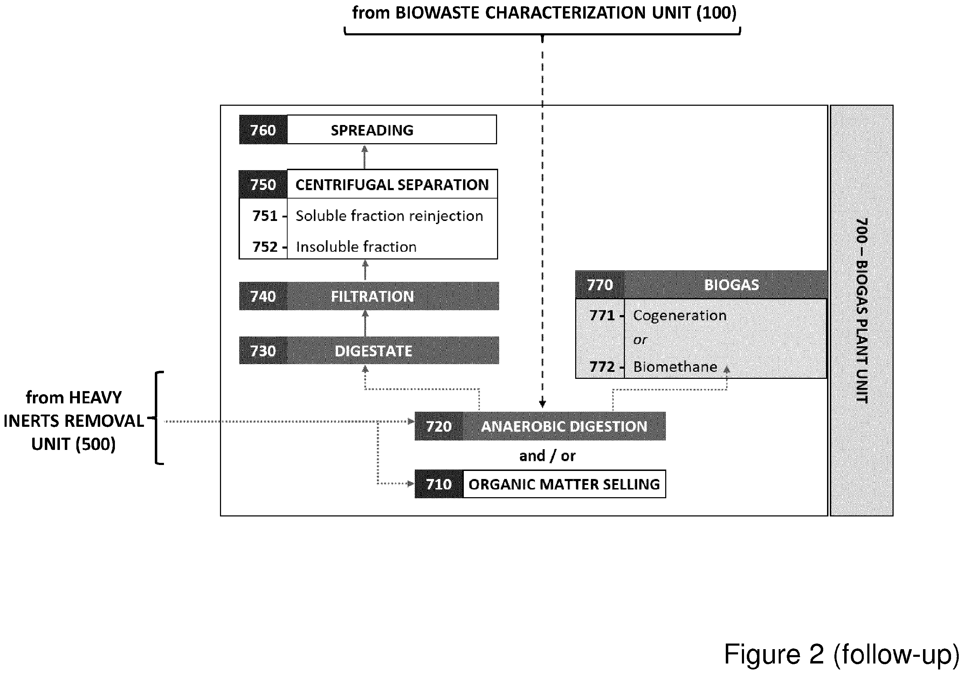

The liquid waste management module may comprise different elements including, but not limited to, a storage pit for storing the unpackaged liquid biowaste in bulk, one or more sedimentation tanks for the at least partial removal of heavy particles by natural sedimentation (Figure 2, (A)) and a liquid injection device, e.g., a centrifugal pump, for injecting the liquid biowaste directly into the deconditioner cage (module 332, flow 410).

The water used for washing of the bins is enriched in organic matter and it can be reintegrated into the hopper (module 221, flow 420). In this way, all the organic matter can be recovered, and the water used for washing is not lost.

At this point, i.e. at the outlet of the ON-SITE RECEPTION UNIT (200), the liquid and solid/mixed wastes are ready to be sent to the LIGHT INERTS REMOVAL UNIT (300). The liquid waste is injected directly into the deconditioner module (330) via flow 410. To maximize the deconditioning, the solid/mixed waste optionally passes through a hopper screw (310) and, optionally, a grinding module (320).

The device of the present invention further comprises a LIGHT INERTS REMOVAL UNIT (300) configured for removing light inert particles.

As used herein, the term 'inerts' means those components that cannot be digested by microorganisms present in the digester. The amount of inerts varies as a function of the nature of the waste. For example, sewage, agricultural and animal waste typically does not contain a significant quantity of inerts. Being undigestible, inert components are often composed of inorganic materials. For example, the term 'light inert particles' used in the present text may refer to low-density plastic particles, e.g., polyethylene (PE) particles. The term 'inert' as used in the present text can refer to small particles as well as to larger foreign bodies, residues or fragments of inert materials.

As used herein, the terms 'light' and `heavy' used in association with, e.g., the terms 'residues' or 'particles' as in, for example, 'light residues', indicate a property of said residues/particles which essentially depends upon their density. For example, paper, cardboard, plastics are to be considered as 'light residues', while sand, stones, shells, sediments, glass and metal pieces are to be considered as 'heavy residues'. The skilled person knows how to distinguish and separate 'light residues' from 'heavy residues' based, e.g., on their density, and by using the techniques known in the art for determining the density or any other relevant property connected to it. The term 'residues' as used in the present text refers to coarse residues, i.e. residues of macroscopic size such as visible foreign bodies or fragments.

According to some embodiments, the LIGHT INERTS REMOVAL UNIT (300) of the invention allows for the removal of light inert particles as well as for the removal of part of the heavy inert particles.

According to the invention, the LIGHT INERTS REMOVAL UNIT (300) may comprise a hopper screw (310).

In the context of the device of the present invention, the hopper screw acts as a coarse mixer, i.e. it favours the mixing of solid wastes and it allows preparation of the matter for its deconditioning.

As used herein, the term 'packaging' refers to any material that is used to wrap or protect biowaste and that is not biodegradable under the conditions of anaerobic digestion, e.g. plastic packaging such as plastic bags, plastic films, plastic trays *etc.* Packaging is a component of the collected biowaste that needs to be separated from the organic matter before the organic matter can be further treated.

The module for mixing solid wastes and for pre-separating the packaging from the organic matter described above can optionally be connected to a module for grinding organic waste material(s) (320). The purpose of this optional module is to further split the organic waste material(s), which improves the performance of the deconditioning in the following module (deconditioning module 330), without generating too small inerts particles that would be difficult to extract. A diameter equal or inferior to about 50mm of the particles after grinding represents a good compromise between these aspects.

Until to this step in the process performed by the claimed device, packaging possibly present in the collected biowaste can still be present. For the organic matter to be processed to obtain an organic soup, packaging needs to be removed completely. This is accomplished by the at least one deconditioner module (330).

According to the invention, the LIGHT INERTS REMOVAL UNIT (300) comprises at least one deconditioner module (330) to separate packaging and other light residues from organic matter (Figure 2, (B)).

As used herein, the terms 'deconditioner module' or 'deconditioner' refers to a module for separating coarse packaging and other light residues from organic matter. Besides removing coarse packaging and light particles, the function of the deconditioner according to the invention is also to increase, as much as possible, the recovery of organic matter that might be present on the packaging. In other terms, the function of the deconditioner is i) to obtain clean organic material i.e. with no/limited inert content, and ii) also to obtain very clean packaging, i.e. without any substantial amount of organic material.

The at least one deconditioner module according to the invention, hereinafter referred to as 'main deconditioner', may comprise a main deconditioner hopper (331) and a deconditioner cage (332).

As used herein, the term 'deconditioner hopper' indicates a machinery for homogenizing and transporting biowaste and inert packaging material(s) into the deconditioner cage.

As used herein, the term 'deconditioner cage' indicates a machinery having centrifugation role. The deconditioner cage may comprise a grid perforated with holes, e.g., round holes having a diameter of 20mm, allowing the organic matter to pass through and flow downwards while the packaging material(s) are retained by the grid and are conveyed by a rotor, e.g., a vertical rotor with welded impellers to transfer packages from bottom to top.

By using the main deconditioner of the invention, the coarse packaging materials are removed from the organic matter. For example, at the end of this stage, and with the device of the invention, it is possible to obtain unpackaged organic matter containing 0.01 to 0.3% of inerts (essentially heavy inerts) and some smaller residual light inerts.

Optionally, a plastic press (333) can be installed at the outlet of the main deconditioner module to extract residual organic matter from packaging, thus increasing the extraction yield of the organic matter.

The connection between the liquid waste management module and the main deconditioner (470 in Figure 2) helps to improve cleaning of the packaging in order to increase the yield of organic matter extraction. To do so, passing through 470, the liquid waste coming from the liquid waste management module (210) is heated before it is sent to the main deconditioner. Thanks to this operation, the packaging is cleaner and is therefore eligible for higher quality recycling channels (Solid recovered fuel, or SRF, rather than ordinary industrial waste). Such automatic control of liquid flows to optimize unpackaging is therefore an advantage of the present invention, through which better performance of the device can be achieved.

According to a specific embodiment, the device according to the invention also includes a BIOWASTE CHARACTERIZATION UNIT (100) comprising a documentary system (120) for selecting and dosing input waste materials.

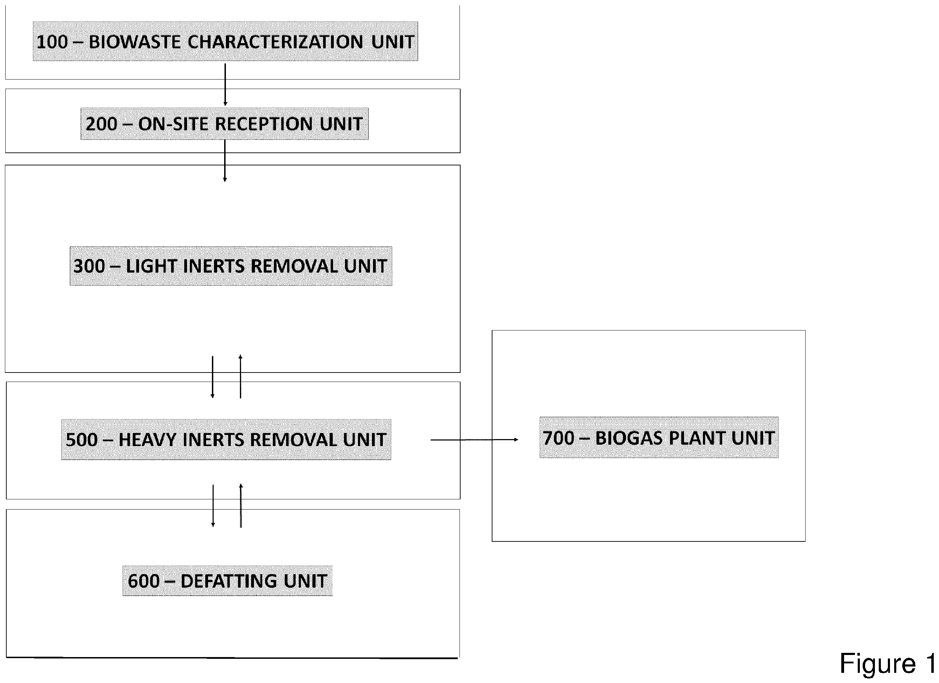

An objective of the present invention is to treat all types of organic waste (110). Examples of biowaste that need to be treated include animal co-products, food industry waste, sewage sludge, unsold items from supermarkets, community waste, waste sorted at source, restaurant and canteen waste, households kitchen wastes, *etc.* In addition, biowaste can be packaged or not, can be in liquid or solid form, *etc.* There is thus a need for a robust and resilient method for treating, through a standardized treatment, all possible waste despite the high variability of their contents, packaging, textures, physico-chemical properties, *etc.* To this aim, a BIOWASTE CHARACTERIZATION UNIT (100), comprising a documentary system (120), can be added to the device according to the invention, as shown in Figures 1 and 2.

As used herein, the term 'documentary system' refers to a system for the optimization of waste management. The 'documentary system' comprises a computer device (e.g., a microcomputer, a workstation or a light portable device) configured to store data related to the features of different sources of waste and optionally to calculate the amounts of these sources of waste that can be blended to reach target values of a number of parameters such as the organic material content, the solid/liquid ratio, a maximal value of fermentation inhibitors, etc.

According to a particular embodiment, for each biowaste to be treated, the owner of the biowaste fills in an information form (either online or via a paper support) to indicate some features of the biowaste, such as:
- its nature,
- waste code (e.g., EWC),
- organic material content,
- amounts,
- presence/quantification of fermentation inhibitors,
- quantification of the Biochemical Methane Potential (BMP), and/or
- compliance with conformity regulations, etc.

When necessary, the information provided by the owner of the waste can be completed through additional analyses performed to determine any important parameter for which the information is missing.

This information is then stored in the documentary system (e.g., under the form of a profile for each biowaste product/source).

The documentary system allows for the evaluation and validation of the biowaste before processing.

Advantageously, the documentary system is also configured to run a computer program that determines, from the information stored regarding each waste, which wastes are to be blended, and in which quantities, to optimize the treatment of the whole waste.

The documentary system according to the present invention can also evaluate the impact of each type of biowaste on the methanization process. More specifically, it allows to take into account the heterogeneous nature and daily variability of the input biowaste to minimize the impact that such fluctuations in the biowaste composition may have on the biological activity of the flora present in the digester.

The result of the operations performed by the documentary system is the selection and dosage of the input waste materials that are used in the following steps of waste deconditioning. At this stage, the packaging possibly present in the biowaste is still present. Wastes that have been collected by mistake and/or that cannot be treated because they would have a negative impact on the methanization process are, at this stage, sent to other circuits, e.g. the circuit of non-hazardous industrial waste, the circuit destined to the recovery of large metal or wooden pieces, *etc.*

The documentary system thus avoids having to set up specific collections for categories of organic waste and having to run separate deconditioning treatments for each waste category. In fact, in the context of the present invention, all types of organic waste are mixed and processed on the same production line. This allows a reduction of the required equipment as well as of the labour intensity. It also represents an environmental gain because organic wastes coming from different sources can be collected together.

A further advantage of the documentary system is to obtain an organic soup having a rather stable composition and properties, despite the high variability of the input wastes. In turn, a stable composition of the organic soup allows to maximize the performance of the BIOGAS PLANT UNIT, thus increasing the value that can be extracted from the initial wastes.

Another advantage of the device of the present invention is based on the fact that it can treat at the same time very large volumes of highly heterogeneous waste, i.e. it can be run at any waste industrial flow. For example, the industrial throughputs of the device of the invention can be 250 tons/day.

According to a specific embodiment, the LIGHT INERTS REMOVAL UNIT (300) of the preceding device further comprises a second deconditioner module (340).

According to this embodiment, one or more additional deconditioners can be used to further improve the removal of light inerts (Figure 2, (C)).

When a second deconditioner (340) is installed, it is connected directly to the main deconditioner (330).

The one or more additional deconditioners can be identical to the main deconditioner or can be different. For example, the one or more additional deconditioners can have a different size, e.g., they can be smaller, and may comprise only the deconditioning cage and no deconditioner hopper. The grid perforation may also be different, e.g., the grid perforation of the second deconditioner may be smaller, for example twice as small compared to the grid perforation of the main deconditioner.

A pump (350) to convey the deconditioned organic matter at the output of the main deconditioner (330) to the second deconditioner (340) may be used.

Such pump can be, e.g., an eccentric screw pump.

As observed by the inventors, a second deconditioner allows an additional reduction of the inerts in the deconditioned organic matter.

As already mentioned above, an additional advantage of the use of a second deconditioner is that it acts, in case of malfunction or failure of the main deconditioner module, as a security by avoiding that coarse packaging and other light residues remain in the organic matter.

The inventors also observed that, regardless of the use of one or more deconditioners, the deconditioning performances make it possible to obtain packaging waste of sufficiently good quality to receive the status of Solid Recovered Fuel (SRF).

According to a particular embodiment, the LIGHT INERTS REMOVAL UNIT (300) of the preceding device further comprises at least a press (333 and/or 341) configured for extracting residual organic matter from packaging.

The packaging material(s) obtained at the output of the deconditioner module(s) can be used to extract residual organic matter. This can be done, e.g., by means of a plastic press.

The LIGHT INERTS REMOVAL UNIT (300) may further comprise a pump (350) (e.g., an eccentric screw pump).

The pump (350) can be used to convey the deconditioned organic matter to the HEAVY INERTS REMOVAL UNIT (500).

A pump (350) can also be used to convey the organic matter at the outlet of the main deconditioner (330) to the second deconditioner (340).

A pump (350) can further be used to allow the automatic control of the injection of liquid into the main deconditioner (330) (via flows 410, 430, 440, 450, 450) to adjust the dry matter content of the organic soup. The liquid can be, for example, water or various liquid flows available on-site and appropriate for diluting the organic matter to the necessary dry matter content. For doing so, a pump is connected to a system for pressure measurement (380) and/or electric current intensity measurement (380').

The previous modules have made it possible to eliminate most of the light inerts. At this stage, heavy inert materials such as bone debris, shells, sand, *etc.,* are still present in the organic matter. Having a heavier density than the organic phase, they could not be extracted with the previous centrifugation steps. Further operations are necessary to effectively remove these heavy inerts, which are realized by the HEAVY INERTS REMOVAL UNIT (500).

As already mentioned, the device of the present invention comprises a HEAVY INERTS REMOVAL UNIT (500) combining static and dynamic sedimentations.

This HEAVY INERTS REMOVAL UNIT (500) may comprise one or more of the following elements:
- a combination of one or more settling tanks (510) for the removal of coarse heavy inerts (Figure 2, (D)) and pots and sedimentation tanks (520) for the removal of heavy and light inerts (Figure 2, (E)). The sedimentation pots function as traps where sediment is continuously removed by a system of opening/closing knife gate valves from the extraction chamber. Sedimentation is natural at this stage. To allow time for the inerts to settle, the settling line is designed by gravity, which means that the circulation of the organic matter between the sedimentation tanks takes place by gravity, without the need for a pump. The sedimentation tanks are based on an overflow system, so that as soon as the capacity of one tank is reached, the organic matter flows into the following tank, which is positioned at a lower level with respect to the preceding tank. The advantage of the use of sedimentation pots is that they allow continuous sedimentation of the organic matter flow, whereas a larger sedimentation tank needs a residence time to ensure sedimentation;
- an hygienization module (530), for the hygienization of the organic matter. As used herein, the term 'hygienization' refers to low temperature thermal pasteurization of an organic matter, which is achieved by heating said organic matter at about 50-90°C for at least 1 hour. Hygienization is required by current veterinary legislation to control the sanitary risk associated with the presence of certain pathogens present in animal-derived biowaste such as animal by-products. The temperature imposed by relevant regulations, which is 70°C, is sufficient for the inactivation of such pathogens. For all biowaste that does not contain animal-derived biowaste, there is no regulatory requirement about the temperature at which the organic matter needs to be heated. Even if, at this stage, the organic matter has not been obtained from animal-derived biowaste, it may be convenient to submit it to a thermic treatment. In fact, heating the organic soup before sending it to the hydrocyclone(s) (540) increases the performance of the latter. If the objective is to reduce the content of heavy inerts, e.g. in a hydrocyclone, temperatures lower than the regulatory temperature of 70°C are appropriate. However, increasing the temperature allows to increase the performance of the hydrocyclone(s), i.e., its separation capacity. Alternatives based on non-thermal pasteurization technologies also exist. The hygienization module comprises at least one heat source allowing the organic matter to be heated at about 50-90°C for at least 1 hour, and at least one heat exchanger (531 and/or 532). The heat source can be provided by different options, for example a gas, a biomethane or a biogas boiler, or it can be thermal energy from co-generators or any other fatal energy coming from another industrial or heating activity. The heat source can be sustainable, which allows to limit the environmental impact of the process. To further improve the energy performance of the device, at least one heat exchanger can be used, e.g., two heat exchangers. For example, when using two heat exchangers, the first heat exchanger can be a matter/matter economizer (531), which allows the cold organic matter to be reheated at the hygienization input thanks to the hygienized hot organic soup (this soup must be cooled to be shipped or to feed a methanization unit). The second heat exchanger can be a matter/water heat exchanger (532), allowing the regulatory temperature of 70°C to be reached by using hot water from one of the two heat sources mentioned above;

- one or more hydrocyclones (540), configured to eliminate the residual heavy inert particles from the organic matter by centrifugal force (Figure 2, (F)). A hydrocyclone uses incoming fluid pressure to generate centrifugal force and a flow pattern that can separate particles from a liquid medium. Since the heavy residual inerts have a different density from the organic matter, the centrifugal force makes it possible to eliminate these particles.

According to a specific embodiment, the device of the present invention further comprises means for recirculating the organic material between the hygienization module (530) and the HEAVY INERTS REMOVAL UNIT (500).

The present invention provides for the use of one or more hydrocyclones at the same time as the hygienization step, i.e. it allows for the recirculation between steps 530 and 540. The number of recirculation cycles can vary depending on the desired level of heavy inert particles in the organic soup, e.g., it can be 1, 2, 3 or 4. The advantages of recirculating the organic matter at this stage are that (i) the removal of heavy inerts is facilitated in hot organic matter (which has higher fluidity) because of the increased density difference between the liquid and the particles to be removed, and (ii) recirculation allows the organic matter to be treated several times.

Therefore, the efficiency of heavy inerts removal as disclosed by the present invention is linked to the use of one or more hydrocyclones in parallel with the hygienization step.

Another advantage of such recirculation is that this step allows to obtain an organic soup of high quality that can, after recirculation, be directly injected in a DEFATTING UNIT (600). In fact, the heating of the organic soup and its recirculation between the hygienization module (530) and the one or more hydrocyclones (540) allows to efficiently separate the heavy inerts. This, in turn, permits to obtain an organic soup of high quality that can be directly injected into the DEFATTING UNIT (600) without risk of abrasion of the components of the unit itself, e.g., the centrifugal decanter (610) and/or tricanter (610') due to the heavy inerts.

The present invention takes advantage of heat to (i) better separate heavy inerts during (540) and (ii) to better extract fat from organic soup in the DEFATTING UNIT (600), particularly at the level of the centrifugal decanter (610) or tricanter (610'). Indeed, a warm organic matter at the exit of hygienization facilitates the extraction of fat. To improve defatting, the organic matter can be heated even more before entering the centrifugal decanter or tricanter.

At this stage, the organic soup can be further used to extract fat, through the DEFATTING UNIT (600). Alternatively, the organic soup can be sold to other biogas plants (710). Before sale, a filtration step is necessary to extract the residual light inerts contained in the organic soup (those normally eliminated in the light residues separation module (620)).

The organic matter can also be sent to a BIOGAS PLANT UNIT (700), where it is biologically treated.

It is important to note that the device according to the present invention may or may not be physically connected to a BIOGAS PLANT UNIT.

According to a particular embodiment, the device according to the present invention is not connected to a BIOGAS PLANT UNIT, i.e., they are on physically separated sites. In fact, waste deconditioning can take place at one site and the organic soup thus obtained can be sent to a BIOGAS PLANT UNIT located on a different site to be treated by anaerobic digestion. Physically separating the devices for waste deconditioning and anaerobic digestion has an environmental advantage in that, after deconditioning, the organic soup has been separated from packaging and is therefore lighter to transport.

According to another aspect, the device according to the present invention is connected to a BIOGAS PLANT UNIT (700) comprising:
a) an anaerobic digestion module (720) configured for the anaerobic digestion of the organic soup,
b) a digestate module (730),
c) a filtration module (740) configured for removing the inert particles from the digestate, and
d) optionally, a module (750) configured for separating the insoluble fraction from the digestate.

According to a particular embodiment, the HEAVY INERTS REMOVAL UNIT (500) is connected to the BIOGAS PLANT UNIT (700) through the hygienization module (530) and, in particular, through the matter/matter economizer (531). By passing through the matter/matter economizer to reach the BIOGAS PLANT UNIT, the organic soup is advantageously cooled down before fermentation. The maximum temperature of the organic soup arriving at the BIOGAS PLANT UNIT is preferably around 42°C.

According to a preferred embodiment, the bacterial flora used for anaerobic fermentation in the BIOGAS PLANT UNIT is resilient, i.e., it can digest organic soups with a certain variability in, for example, the nitrogen content.

According to the invention, after anaerobic digestion (720), a filtration step (740) of the digestate takes place to remove the residual inerts still present in it. Said residual inerts comprise, for example, plastics, cardboard packaging fibers, *etc.* This filtration step is particularly important if the digestate is to be used for spreading (760). Indeed, the removal of the residual inerts guarantees the physical harmlessness of the digestate so that it can be safely spread, e.g., on agricultural lands as fertilizer. Filtration can be carried out on meshes of appropriate size, e.g., on meshes of 0.2-2 mm. The inventors have observed a significant reduction of the residual inerts thanks to this filtration step. In particular, by using a round mesh sieve of 2 mm size they obtained a residual inerts content of the digestate of about 0.015%, while the use of a round mesh sieve of 1 mm size allowed to obtain an inert content as low as about 0.000225%.

After filtration (740), a module configured for separating the insoluble fraction from the digestate by centrifugal separation can optionally be implemented, referred to as the centrifugal separation module (750). Said insoluble fraction comprises water-insoluble components such as mineral matter, fibers and trace elements, which may still be present in the digestate after filtration (740). After centrifugal separation, the insoluble fraction is separated from the water-soluble fraction of the digestate, which comprises water, proteins, salts *etc.* The advantage of centrifugal separation is that it makes possible to increase the dry matter content of the digestate by eliminating part of the water present in the digestate, which reduces the volume of digestate to spread (digestate contains about 96% of water), which in turn also reduces the operating costs.

According to another aspect, the device according to the present invention is connected to a DEFATTING UNIT (600) comprising:
a) a phase separator module (610 or 610') configured to separate fat from materials of higher density present in the organic soup;
b) a light residues separation module (620), connected to the module of point a), comprising:
   i) a first physical separation device (621) configured to separate light residues with lower density than water (especially plastic residues) from the fat,
   ii) a press (622) configured to apply a pressure onto the light residues to collect the residual fat, or a second physical separation device (623) such as a centrifugation device, and means to convey the residual fat back to the phase separator module, and
c) a storage and sedimentation module (630), configured to allow the separation of fat from the residual fraction.

The above device is referred to as DEFATTING UNIT in the present text and it is configured for extracting fat from an organic soup.

According to a particular embodiment, the HEAVY INERTS REMOVAL UNIT (500) is connected to the DEFATTING UNIT (600). According to another particular embodiment, the LIGHT INERTS REMOVAL UNIT (300) is connected to the DEFATTING UNIT (600), for example in the case in which the device that receives the waste does not comprise a HEAVY INERTS REMOVAL UNIT.

The term `fat' is used herein as usually understood by the skilled person and includes compounds such as any ester of fatty acids, or fatty acids compounds or a mixture of such compounds, as well as mono-di-triglycerides and free fatty acids. The term fat also includes saturated fat, unsaturated (oil), or grease or a mixture of both. The sources of the fat can be any, e.g., vegetable oils, animal tissues, dairy products etc.

As used herein, the term 'phase separator module' refers to any module whose function is to separate fat from materials of higher density present in the organic soup. The materials of higher density are hereinafter referred to as 'defatted organic soup'.

The separation is based on the density difference between fat and the rest of the organic soup. However, since fat and light residues have similar densities, light residues are retained in the fat fraction obtained after the organic soup has passed through the phase separator module.

To improve the quality of the fat so that it can be directly used, e.g., as a biofuel, the light residues need to be removed.

To this aim, the present invention makes use of an additional module, referred to as 'light residues separation module' (620).

The light residues separation module according to the invention comprises a first physical separation device, configured to separate the light residues from fat. According to the invention, the first physical separation device (621) is preferably a drum sieve (621), for example a drum sieve with a mesh size of about 10 mm. According to a particular embodiment, the fat is injected into the drum sieve at a volume flow rate of about 0,2 - 5 m³/hour.

Optionally, at the output of the light residues separation module, part of the filtered fat is recirculated on the first physical separation device (e.g., a drum sieve) to improve separation.

The light residues separation module according to the invention may further comprise a press (622) configured to apply a pressure onto the residual light residues to collect the residual fat (Figure 2, (G)), or a second physical separation device (623) such as a centrifugation device. The use of such a press can yield about 30 to 300 liters of fat for 1m³ of pressed light residues. A centrifugal separation can achieve even better fat/plastic separation efficiency. Hence, a press or centrifugation device allows to further increase the fat extraction yield. Such extraction yield depends on the performance of the at least one deconditioner module. In fact, an efficient deconditioning with the at least one deconditioner module allows to obtain an organic matter with a low content of light residues. Having less light residues in the organic matter translates into less fat trapped in such residues.

In addition, fat from the physical separation device (621) can recirculate onto the phase separator module itself (610 or 610') with the aim to increase the fat content of the organic matter by increasing the fat content in the soup at the entry of the phase separator module, thus improving the extraction. This also helps to maintain good fluidity in the phase separator module.

According to the device of the invention, the light residues separation module is connected to a 'storage and sedimentation module'.

As used herein, the term 'storage and sedimentation module' refers to any module whose function is to allow the separation of fat from the residual heavier fraction.

The storage and sedimentation module (630) according to the invention may comprise, for example, one or more tanks with conical bottoms, where the fat may reside for a variable time, e.g. 24 hours. After this separation time in the tank(s), the lowest part of the tank(s), where water and sediments have accumulated, can be conveyed to a deconditioner module (via connection 450) or to a storage tank before hygienization, and the fat can be directly used as biofuel, further processed in a predictable way to obtain a predictable biofuel with the required characteristics or used for other applications.

More generally, the present invention covers any combination of the above mentioned device for preparing an organic soup and/or BIOGAS PLANT UNIT and/or DEFATTING UNIT. The present invention equally covers any combination of the modules within each device and unit, so that within each device and unit the modules can differ in number and in the way they are connected. Based on the goal that the skilled person wants to achieve, he/she will know how to connect the above mentioned device, units and modules to reach the desired aim.

The present invention also pertains to a method for preparing an organic soup from organic waste material(s) using the preceding device, comprising:
a) selecting, analyzing and dosing input waste materials using a documentary system;
b) collecting the organic waste material(s) selected in a), separating the liquid wastes from the solid/mixed wastes and:
   i. optionally, removing the heavy particles from the liquid wastes by sedimentation, and
   ii. optionally, discharging the solid/mixed wastes into a hopper (221) allowing the mixing of the materials to be treated,
c) removing light inert particles by:
   i. optionally, mixing the solid wastes and allowing the preparation of the matter for its deconditioning by means of a hopper screw (310), and
   ii. separating packaging and other light residues from organic matter by means of at least one deconditioner module (330),
d) removing heavy inert particles by:
   i. allowing the heavy inert particles to sediment,
   ii. heating the organic matter at about 50-90°C for at least 1 hour, and
   iii. eliminating the residual heavy inert particles from the organic soup.

According to step b) of the method of the invention, the selected organic waste material(s) are collected and liquid wastes are separated from solid/mixed wastes. The classification of the collected wastes as liquid or solid/mixed wastes depends on the particular way said wastes are collected and on the presence or absence of packaging. The separation of liquid wastes from solid/mixed wastes refers to the storing of the two types of waste in two different places. All wastes collected by conventional trucks, either in bulk in a container or in bins and palboxes filled by customers are considered as solid/mixed waste. This waste can be discharged into a hopper. Unpackaged liquid waste, received on-site directly in liquid form by tank trucks, are considered as liquid waste. The tank trucks deposit the liquid bulk in a storage pit. These two waste streams, liquid and solid, meet in the deconditioner module. Therefore, by way of example, milk is considered liquid waste if it is collected in bulk via a tank truck, but a (full) milk bottle is considered solid waste.

According to step c), point ii) of the above method, the at least one deconditioner module is used to further separate the organic material from the packaging that comes from the solid/mixed waste. According to the method of the invention, said separation is facilitated by the use of liquid waste (as defined above) and, possibly, by the use of other liquid(s), if required.

At the end of this stage, the most of the separated packaging material(s) does not contain organic matter and the most of the separated organic matter does not contain packaging material(s). It is thus a further advantage of the present invention to make it possible to use the large majority (> 99%) of the organic matter present in the organic waste material(s) for further valorisation (e.g., by treatment of such organic matter in the BIOGAS PLANT UNIT or by extraction of fat in a DEFATTING UNIT) as well as to recover the large majority of the separated packaging material in a clean form (which can then be recycled).

According to step d), point i) of the method of the invention, elimination of residual heavy inert particles from the organic matter is done by allowing the heavy inert particles to sediment. This can be performed by different means, e.g., by one or more settling tanks (510) for the removal of coarse heavy inerts and/or by pots and sedimentation tanks (520) for the removal of heavy and light inerts.

According to step d), point ii) of the above method, further elimination of residual heavy inert particles from the organic matter is performed by heating said organic matter at about 50-90°C for at least 1 hour (e.g., *via* hygienization at about 70°C).

According to step d), point iii) of the above method, further elimination of residual heavy inert particles from the organic matter is performed by e.g., using one or more hydrocyclones (540) for the removal of residual heavy inerts.

The above described method for preparing an organic soup allows to obtain a good quality soup at the outlet of the HEAVY INERTS REMOVAL UNIT, which can be directly used for other applications, e.g. fat extraction.

According to a specific embodiment, the preceding method further comprises a step wherein the liquid wastes collected in step b) are heated and sent to the at least one deconditioner module (330).

According to this aspect of the invention, liquid wastes collected in step b) are heated and sent to the deconditioner cage (332) of the at least one deconditioner module (330), via the connecting means (470). The injection of heated liquid wastes into the at least one deconditioner module (330) allows to improve the extraction of organic matter from the packaging material. Since the energy for heating the liquid wastes can come from a BIOGAS PLANT UNIT (700), this step allows to improve the performance of the deconditioning at lower costs and lower environmental impact. The temperature at which the liquid wastes are heated is between about 40 and 70°C.

According to a particular embodiment, the preceding method further comprises a step of measuring the dry matter content of the organic matter at the outlet of the at least one deconditioner module (330) and adjusting the dry matter content of said organic matter to between 5 and 30%.

As used herein, the term 'dry matter' refers to what remains after all water has been eliminated from a substance or mixture of substances such as an organic soup or organic matter. The term 'dry matter content' refers to the amount of solid materials in a substance or mixture of substances such as an organic soup or organic matter.

According to the invention, the adjustment of the dry matter content of the organic soup can be done by pressure measurement (380) or by electric current intensity measurement (380'). The pressure or electric current intensity measurements are indirect measures correlated to the dry matter content of the organic soup:
- 380: suction and discharge pressure measurements correlated to the dry matter content;
- 380': pump motor electric current intensity measurement, correlated to dry matter content.

These two measurement systems are then slaved to the flow metering valves 410 - 430 - 440 - 450, the opening and closing of which are carried out according to the setpoint value of dry matter to be reached. The priority of flow can be modulated but a preference is given for the priority use of flow 410.

The correct adjustment of the dry matter content is achieved by appropriate control systems, which allow to control the liquid flow directed to the deconditioner module (330), with priority given to the various liquid flows available on-site to significantly limit the use of fresh water.

Generally speaking, the objective is to achieve a dry matter content of about 15% at the outlet of the at least one deconditioner module (330). This is because a dry matter content of about 15% allows good pumping and good sedimentation of heavy inerts.

As a matter of fact, the dry matter content can be increased from 15% up to about 20-30% because with a dry matter of about 20-30% it is possible to increase the treatment capacity in the digesters, without changing the size of the installation. In addition, a dry matter content of about 20-30% still allows for good pumping and good sedimentation of heavy inerts.

The dry matter content is adjusted as above described, between about 15 and 30%, depending on the destination envisaged for the organic soup. For example, if the organic soup needs to be shipped to another device present on a different site, it might be preferable to adjust the dry matter content to about 20-30% to reduce the water content of the organic soup and, therefore, the shipped volume.

According to a particular embodiment, the preceding method further comprises at least two deconditioning steps, so that the percentage of inert particles in the organic soup obtained in step c) is below 0.15%, preferably below 0.10%, more preferably below 0.05%.

As explained above, two deconditioners can advantageously be used in series. This allows a further reduction of the inerts (essentially heavy inerts) in the deconditioned organic matter.

According to a particular embodiment, the preceding method further comprises measuring the dry matter content of the organic soup at the end of step d) and diluting said organic soup to about 5-30% in case it is higher than said value.

As already mentioned, the dry matter content can be deduced from the pressure or electric current intensity of the pump motor, and the dilution of the organic soup to achieve the appropriate dry matter content is preferably done by using various liquid flows available on-site to significantly limit the use of fresh water.

According to a particular embodiment, the organic soup obtained by the above method is processed by anaerobic digestion to produce biogas and digestate.

After anaerobic digestion, the obtained biogas can be recovered by co-generation to produce heat (reused on site) and electricity or by injection of biomethane into the grid.

According to a particular embodiment, the organic soup obtained after step d) of the above method comprises less than 0.3% of inerts.

According to a particular embodiment, the preceding method further comprises a step wherein the digestate obtained from anaerobic digestion is filtered to remove the residual inerts and used for spreading on agricultural land.

### EXAMPLES

Having generally described this invention, a further understanding can be obtained by reference to the following specific examples, which are provided herein for purposes of illustration only, and are not intended to limit the scope of the present invention.

### Example 1

A first deconditioner was installed within the device of the invention and according to Figure 2.

The first deconditioner comprised a deconditioner hopper (331) and a deconditioner cage (332).

The technical characteristics of the deconditioner cage were the followings:
- Grid perforated with round holes having a diameter of 20 mm (the holes allow the organic matter to pass and to flow downwards while retaining packages, which are conveyed to the vertical rotor), and
- Vertical rotor equipped with welded impellers (allowing to transfer packages from the bottom to the top).

This equipment was modified to make the first deconditioner more robust and therefore extend its lifetime as well as to increase its performance.

In particular, the following modifications were made to extend its lifetime:
- The steel was replaced by abrasion-resistant steel (Creusabro 4800 or 8000, which has a lifespan about 50 to 100% longer than conventional steel);
- The steel thickness was increased from 5 to 10 mm;
- Rotor propellers were provided with anti-abrasion welding.

The following modifications were made to increase its performance:
- The perforated grid was divided into two parts: a first part (from the bottom to the middle of the deconditioner cage) having holes with a diameter of 20 mm and a second part (from the middle to the top of the deconditioner cage) having holes with a diameter of 15 mm;
- The angle of attack of the first five propellers of the rotor (starting from the bottom) was increased by 15° to bring the organic matter more quickly into the deconditioner cage, thus avoiding too long a residence time in the deconditioner;
- The rotational frequency was increased from 500 to 800 rpm.

The first deconditioner modified as above was tested for its capacity to separate packaging and other light residues from organic matter. Several tests were performed, for example by measuring the content of inerts when varying the composition of the organic matter at the entry of the first deconditioner.

The amount of inerts was measured in the organic matter at the outlet of the deconditioner and it was found to be between 0.01 and 0.3%. The residual inerts still present in the organic matter were essentially heavy inerts, with only traces of smaller residual light inerts.

A second deconditioner was connected to the first deconditioner described above to further improve the removal of inert particles as well as to prevent possible problems caused by the malfunction or failure of the main deconditioner.

The technical characteristics of the second deconditioner were the followings:
- The size was smaller compared to the first deconditioner;
- Only a deconditioning cage, but not the deconditioner hopper, was present;
- The material was the same as for the first deconditioner (i.e., abrasion-resistant steel);
- Grid perforated with round holes having a diameter of 7 to 10 mm (twice as small as the holes of the first deconditioner).

The first and second deconditioner described above were connected in series and were tested for their capacity to further improve the removal of inert particles from organic matter. Several tests were performed, for example by measuring the content of inerts when varying the composition of the organic matter.

The use of two deconditioners as the above in series allowed further reduce inerts in the deconditioned organic matter.

### Example 2

Table 1 shows the most relevant parameters measured on the organic soup obtained before hygienization and after hygienization and defatting using the device and method of the present invention.

More particularly, Table 1 shows the results of the analysis of three different organic soups, i.e. three organic soups obtained on different days from different organic waste materials (i.e., different in nature and proportion). Despite the variability of the initial organic waste materials, the results show that the physico-chemical parameters of the organic soups are rather stable, which demonstrates that the method of the invention can be applied to all types of biowaste. As already mentioned, the rather stable composition of the organic soup also has a positive impact on the process of anaerobic digestion, by making it more efficient.

The results also show that the content of raw ashes, fibers, proteins and carbohydrates is rather constant among the different batches and regardless of defatting. The fact that defatting does not impact these parameters demonstrates that the defatting method of the invention does not degrade the quality of the organic soup in terms of raw ashes, fibers, proteins and carbohydrates. The presence of these compounds has a positive influence on the bacteria used in anaerobic digestion. It is also to be noted that these parameters are closely linked to the BMP of the organic soup. In fact, despite lipids contribute the most to the BMP among the different compounds present in an organic soup, carbohydrates also affect the BMP, especially if present in high concentration. Therefore, it is an advantage of the defatting method of the present invention not to alter the concentration of such compounds.

As mentioned in the previous paragraph, lipids contribute more than carbohydrates to the BMP of an organic soup. The results in Table 1 show that, because of defatting, the BMP of the defatted organic soup decreases. This means that the amount of biogas obtainable through anaerobic digestion of the defatted organic soup is lower than the amount of biogas that can be obtained from the same organic soup before defatting. However, the lower yield of anaerobic digestion is more than offset by the value of the recovered fat, so that the combined value of the recovered fat and of the biogas obtained from the digestion of the defatted organic soup surpasses the value of the sole biogas obtainable from a non-defatted organic soup.

**Table 1: Relevant parameters measured on different runs of organic soups obtained before hygienization and after hygienization and defatting using the device and method of the present invention.**

| | | | **Run 1** | | **Run 2** | | **Run 3** | |
|---|---|---|---|---|---|---|---|---|
| **Parameter** | **Method** | **Unit** | **Before hygienization** | **After hygienization and defatting** | **Before hygienization** | **After hygienization and defatting** | **Before hygienization** | **After hygienization and defatting** |
| **BMP** | Calculated according to Baserga 1998-01 | NL CH₄/kg VS* | 116 | 80 | 130 | 78 | 132 | 73 |
| **Total CH₄ share** | Calculated according to Baserga 1998-01 | % | 62,2 | 57,9 | 62,2 | 57,5 | 62,8 | 57,2 |
| **Raw ash** | VO (EG) 152, Appendix III, C 2009-01 | % RM | 1,7 | 1,8 | 1,9 | 1,8 | 1,8 | 1,7 |
| **Raw protein** | VO (EG) 152, Appendix III, M 2009-01 | % RM | 4,7 | 5,1 | 4,8 | 4,8 | 4,8 | 4,5 |
| **Raw fat B** | VO (EG=) 152, Appendix III, H 2009-01 | % RM | 6,4 | 0,9 | 7,4 | 0,9 | 8 | 0,7 |
| **Fat yield extraction** | Calculated | % | 86% | | 88% | | 91% | |
| **Raw fiber** | VO (EG) 152 Appendix III, I 2009-01 | % RM | 0,7 | 0,8 | 0,7 | 0,8 | 0,7 | 0,8 |
| **Total carbohydrates** | Calculated | % RM | 6,7 | 8 | 7,5 | 8,1 | 6,9 | 7,6 |
| **Dry matter** | VO (EG) 152 Appendix III, A (external) 2009-01 | % RM | 20,2 | 16,7 | 22,4 | 16,3 | 22,3 | 15,3 |

| | | | | | | | | |
|---|---|---|---|---|---|---|---|---|
| *NL = norm liter; VS = volatile solids. | | | | | | | | |

## Claims

1. A device for preparing an organic soup from organic waste material(s), comprising:
a) an ON-SITE RECEPTION UNIT (200) comprising:
i. a solid/mixed waste management module (220) and/or
ii. a liquid waste management module (210),
b) a LIGHT INERTS REMOVAL UNIT (300) configured for removing light inert particles, comprising:
i. optionally, a hopper screw (310) for mixing the solid wastes and allowing the preparation of the matter for its deconditioning, and
ii. at least one deconditioner module (330) to separate packaging and other light residues from organic matter, and
c) a HEAVY INERTS REMOVAL UNIT (500) combining static and dynamic sedimentations.

2. The device of claim 1, further comprising a BIOWASTE CHARACTERIZATION UNIT (100) comprising a documentary system (120) for selecting and dosing input waste materials.

3. The device of claim 1 or claim 2, wherein the HEAVY INERTS REMOVAL UNIT (500) is connected to a BIOGAS PLANT UNIT (700) comprising:
a) an anaerobic digestion module (720) configured for the anaerobic digestion of the organic soup,
b) a digestate module (730),
c) a filtration module (740) configured for removing the inert particles from the digestate, and
d) optionally, a module (750) configured for separating the insoluble fraction from the digestate.

4. The device of any one of claims 1 to 3, wherein the HEAVY INERTS REMOVAL UNIT (500) is connected to a DEFATTING UNIT (600) comprising:
a) a phase separator module (610 or 610') configured to separate fat from materials of higher density present in the organic soup;
b) a light residues separation module (620), connected to the module of point a), comprising:
i) a first physical separation device (621) configured to separate light residues with lower density than water (especially plastic residues) from the fat,
ii) a press (622) configured to apply a pressure onto the light residues to collect the residual fat, or a second physical separation device (623) such as a centrifugation device, and means to convey the residual fat back to the phase separator module, and
c) a storage and sedimentation module (630), configured to allow the separation of fat from the residual fraction.

5. The device of any one of claims 1 to 4, wherein the LIGHT INERTS REMOVAL UNIT (300) further comprises a second deconditioner module (340).

6. The device of any one of claims 1 to 5, wherein the LIGHT INERTS REMOVAL UNIT (300) further comprises at least a press (333 and/or 341) configured for extracting residual organic matter from packaging.

7. The device of any one of claims 1 to 6, further comprising means for recirculating the organic material between the hygienization module (530) and the HEAVY INERTS REMOVAL UNIT (500).

8. The device of any one of claims 1 to 7, wherein the industrial throughputs of said device can be as high as 250 tons/day.

9. A method for preparing an organic soup from organic waste material(s) using the device of any of claims 1 to 8, comprising:
a) selecting, analyzing and dosing input waste materials using a documentary system;
b) collecting the organic waste material(s) selected in a), separating the liquid wastes from the solid/mixed wastes and :
i. optionally, removing the heavy particles from the liquid wastes by sedimentation, and
ii. optionally, discharging the solid/mixed wastes into a hopper (221) allowing the mixing of the materials to be treated,
c) removing light inert particles by:
i. optionally, mixing the solid wastes and allowing the preparation of the matter for its deconditioning by means of a hopper screw (310), and
ii. separating packaging and other light residues from organic matter by means of at least one deconditioner module (330),
d) removing heavy inert particles by:
i. allowing the heavy inert particles to sediment,
ii. heating the organic matter at about 50-90°C for at least 1 hour, and
iii. eliminating the residual heavy inert particles from the organic soup.

10. The method of claim 9, wherein the liquid wastes collected in step b) are heated and sent to the at least one deconditioner module (330).

11. The method of any one of claims 9 and 10, further comprising a step of measuring the dry matter content of the organic matter at the outlet of the at least one deconditioner module (330) and adjusting the dry matter content of said organic matter to between 5 and 30%.

12. The method of any one of claims 9 to 11, wherein at least two deconditioner modules are used, so that the percentage of inert particles in the organic soup obtained in step c) is below 0.15%, preferably below 0.10%, more preferably below 0.05%.

13. The method of any one of claims 9 to 12, wherein the dry matter content of the organic soup is measured at the end of step d) and is diluted to about 5-30% in case it is higher than said value.

14. The method of any one of claims 9 to 13, wherein the obtained organic soup is processed by anaerobic digestion to produce biogas and digestate.

15. The method of any one of claims 9 to 14, wherein the organic soup after step d) comprises less than 0.3% of inerts.

16. The method of claim 14, wherein the digestate obtained from anaerobic digestion is filtered to remove the residual inerts and used for spreading on agricultural land.

## Amended claims

### Amended claims in accordance with Rule 137(2) EPC.

1. A device for preparing an organic soup from organic waste material(s), comprising:
a) an ON-SITE RECEPTION UNIT (200) comprising:
i. a solid and/or mixed waste management module (220) comprising a hopper and bins and/or
ii. a liquid waste management module (210) comprising a storage pit, a sedimentation tank and a liquid injection device,
b) a LIGHT INERTS REMOVAL UNIT (300) configured for removing light inert particles, comprising:
i. optionally, a hopper screw (310) for mixing the solid wastes and allowing the preparation of the matter for its deconditioning, and
ii. at least one deconditioner module (330) comprising a hopper and a cage to separate packaging and other light residues from organic matter, and
c) a HEAVY INERTS REMOVAL UNIT (500) comprising at least one storage tank (510), and sedimentation tanks (520),
**characterized in that** the device comprises a BIOWASTE CHARACTERIZATION UNIT (100) comprising a documentary system (120) for selecting and dosing input waste materials, wherein said documentary system comprises a computer device configured to store data related to the features of different sources of waste.

2. The device of claim 1, wherein the documentary system (120) wherein comprises, for each biowaste to be treated, data related to its nature, waste code, organic material content, amount, presence and/or quantification of fermentation inhibitors, quantification of the Biochemical Methane Potential (BMP) and/or compliance with conformity regulations.

3. The device of claim 1 or claim 2, further comprising a BIOGAS PLANT UNIT (700) connected to the HEAVY INERTS REMOVAL UNIT (500), wherein said BIOGAS PLANT UNIT (700) comprises:
a) an anaerobic digestion module (720) configured for the anaerobic digestion of the organic soup,
b) a filtration module (740) configured for removing the inert particles from the digestate, and
c) optionally, a centrifugal separation module (750) configured for separating the insoluble fraction from the digestate.

4. The device of any one of claims 1 to 3, further comprising a DEFATTING UNIT (600) connected to the HEAVY INERTS REMOVAL UNIT (500), wherein said DEFATTING UNIT (600) comprises:
a) a phase separator module (610 or 610') configured to separate fat from materials of higher density present in the organic soup;
b) a light residues separation module (620), connected to the module of point a), comprising:
i) a first physical separation device (621) configured to separate light residues with lower density than water, especially plastic residues, from the fat,
ii) a press (622) configured to apply a pressure onto the light residues to collect the residual fat, or a second physical separation device (623) such as a centrifugation device, and means to convey the residual fat back to the phase separator module, and
c) a storage and sedimentation module (630), configured to allow the separation of fat from the residual fraction.

5. The device of any one of claims 1 to 4, wherein the LIGHT INERTS REMOVAL UNIT (300) further comprises a second deconditioner module (340) comprising a hopper and a cage to separate packaging and other light residues from organic matter.

6. The device of any one of claims 1 to 5, wherein the LIGHT INERTS REMOVAL UNIT (300) further comprises at least a press (333 and/or 341) configured for extracting residual organic matter from packaging.

7. The device of any one of claims 1 to 6, wherein the HEAVY INERTS REMOVAL UNIT (500) further comprises a hygienization module (530) comprising at least one heat source and a Matter/Matter economizer (531) and/or a Matter/Water heat exchanger (532).

8. The device of any one of claims 1 to 7, wherein the industrial throughputs of said device can be as high as 250 tons/day.

9. A method for preparing an organic soup from organic waste material(s) using the device of any of claims 1 to 8, comprising:
a) selecting, analyzing and dosing input waste materials using a documentary system, wherein said documentary system comprises a computer device configured to store data related to the features of different sources of waste;
b) collecting the organic waste material(s) selected in a), separating the liquid wastes from the solid and/or mixed wastes and :
i. optionally, removing the heavy particles from the liquid wastes by sedimentation, and
ii. optionally, discharging the solid and/or mixed wastes into a hopper (221) allowing the mixing of the materials to be treated,
c) removing light inert particles by:
i. optionally, mixing the solid wastes and allowing the preparation of the matter for its deconditioning by means of a hopper screw (310), and
ii. separating packaging and other light residues from organic matter by means of at least one deconditioner module (330),
d) removing heavy inert particles by:
i. allowing the heavy inert particles to sediment,
ii. heating the organic matter at about 50-90°C for at least 1 hour, and
iii. eliminating the residual heavy inert particles from the organic soup.

10. The method of claim 9, wherein the liquid wastes collected in step b) are heated and sent to the at least one deconditioner module (330).

11. The method of any one of claims 9 and 10, further comprising a step of measuring the dry matter content of the organic matter at the outlet of the at least one deconditioner module (330) and adjusting the dry matter content of said organic matter to between 5 and 30%.

12. The method of any one of claims 9 to 11, wherein at least two deconditioner modules are used, so that the percentage of inert particles in the organic soup obtained in step c) is below 0.15%, preferably below 0.10%, more preferably below 0.05%, wherein the percentage of inert particles in the organic soup is the ratio between the total mass of the inert components and the mass of the dry matter multiplied by 100.

13. The method of any one of claims 9 to 12, wherein the dry matter content of the organic soup is measured at the end of step d) and is diluted to a value comprised between about 5 and about 30% in case it is higher than said value.

14. The method of any one of claims 9 to 13, wherein the obtained organic soup is processed by anaerobic digestion to produce biogas and digestate.

15. The method of any one of claims 9 to 14, wherein the organic soup after step d) comprises less than 0.3% of inerts, wherein the percentage of inerts in the organic soup is the ratio between the total mass of the inert components and the mass of the dry matter multiplied by 100.

16. The method of claim 14, wherein the digestate obtained from anaerobic digestion is filtered to remove the residual inerts and used for spreading on agricultural land.
